# EUROPÄISCHE PATENTSCHRIFT

(11) **EP 0 792 734 B1**
(45) Veröffentlichungstag und Bekanntmachung des Hinweises auf die Patenterteilung: **31.07.2002**
(21) Anmeldenummer: 96119421.4
(22) Anmeldetag: 04.12.1996
(51) Int. Cl.: B29C 63/04, B29C 45/14

(54) **Verfahren und Vorrichtung zum Umbugen einer Überzugsschicht um eine Kante**
Method and device for folding a cover sheet around an edge
Procédé et dispositif pour replier un revêtement autour d'un bord

(30) Priorität: 01.03.1996 DE 19607855
(43) Veröffentlichungstag der Anmeldung: 03.09.1997
(73) Patentinhaber: Volkswagen Aktiengesellschaft, 38436 Wolfsburg (DE)
(72) Erfinder: Wiesner, Artur, 38442 Wolfsbrug (DE)

(56) Entgegenhaltungen:
- EP-A- 0 127 035
- EP-A- 0 531 977
- EP-A- 0 603 498
- DE-A- 4 317 234
- DE-A- 19 540 975
- PATENT ABSTRACTS OF JAPAN vol. 12, no. 64 (M-672), 26.Februar 1988 & JP 62 211127 A (PURAMATSUKU KK), 17.September 1987,

## Beschreibung

Die Erfindung betrifft ein Verfahren gemäß dem Oberbegriff des Anspruchs 1 sowie eine Vorrichtung gemäß dem Oberbegriff des mabhängigen Anspruchs 3 zur Durchführung des Verfahrens.

Ein solches Verfahren und eine solche Vorrichtung sind aus der EP-A-0 531 977 bekannt.

Das Hinterspritzen von Dekormaterial ist beispielsweise aus "Kunststoffe" 80 (1990), Seiten 997 bis 1002, bekannt. Spritzgegossene Kunststoffteile werden in vielen Bereichen, beispielsweise im Kraftfahrzeugbau an der Oberfläche mit einer Abdeckung aus Textilmaterial, Leder, Folien etc. belegt, um somit eine Verbesserung im Aussehen und im Berührungseindruck zu erhalten. Häufig wird dabei das Belegmaterial mit dem spritzgegossenem Kunststoffteil in einem nachträglichen Arbeitsgang verbunden. Dieser Vorgang ist als Kaschierung bekannt.

Um den für die Kaschierung notwendigen zusätzlichen Arbeitsgang zu vermeiden, werden in zunchmenden Maße die Beleg- oder Dekormaterialien in ein Spritzgießwerkzeug eingelegt. Nach dem Einspritzen des schmelzfömigen Thermoplast ergibt sich die gewünschte Verbindung von Belegmaterial und Kunststoff. Dieser Vorgang wird Hinterspritzen genannt.

Beim Hinterspritzen ergibt sich die Schwierigkeit, einen Umbug zu realisieren. Ein Umbug im Sinne der Erfindung ist das Abdecken der Kante eines Formteiles mit Dekormaterial über den Formteilrand hinaus bis zur Rückseite des Formteils. Mit Hilfe des Umbugs wird somit der Formteilrand vollständig mit Dekormaterial bedeckt und man erhält optisch ansprechende Teile.

Die Schwierigkeiten einen echten Umbug um 180° im Werkzeug zu erreichen, führten zur Einrichtung eines falschen Umbugs oder Scheinumbugs um 90°, wobei der im allgemeinen wenig ansehnliche Außenrand des Formteiles hinter Sichtblenden versteckt bleibt. Diese Lösung erfordert jedoch konstruktive Veränderungen der Baugruppe, in die das hinterspritzte Formteil integriert werden soll.

Aus der Schrift EP 581 035 A1 ist ein Verfahren bekannt, bei dem ein 180°-Umbug erreicht wird, bei dem das Beleg- oder

Dekormaterialende jedoch vor dem Umbugen mit einer dünnen Haut von Formteilmasse bedeckt sein muß.

Des weiteren ist aus der deutschen Patentschrift DE 30 03 903 C2 ein Verfahren bekannt, bei dem der Umbug durch ein dreiteiliges Schiebewerkzeug erreicht wird. Bei diesem Verfahren bleibt jedoch ein Dekormaterialüberstand der in einem gesonderten Arbeitsgang abgetrennt werden muß.

Aus der deutschen Patentschrift DE 41 27 241 C2 ist ein Verfahren bekannt, in dem ein 180°-Umbug mit einem zweiteiligen Werkzeug erreicht wird. Nachteilig bei diesem Verfahren ist jedoch, daß das Dekormaterial nicht dicht an der Werkzeugwand gehalten wird, und Spritzgußmasse zwischen Werkzeugwand und Dekormaterial gelangen kann.

Aus dem deutschen Gebrauchsmuster DE 295 07 067 U1 ist ebenfalls ein 180°-Umbugverfahren bekannt, bei dem jedoch eine zusätzliche Vorbehandlung des Formteilendes erforderlich ist.

Aus der europäischen Patentanmeldung EP 0 127 035 A2 ist ein Verfahren zur sicheren Befestigung einer auf einer Außenfläche eines flächigen Formlings aufgebrachten Auflage durch stirnseitiges Eindrücken der Auflage im Bereich der Flächenränder. Bei dem Formling kann es sich um Innenverkleidungen von Kraftfahrzeugtüren handeln, welche aus thermoplastisch formbaren Kunststoff hergestellt wird. Dort wird jedoch nicht das Herstellverfahren des Hinterspritzens angewandt.

Aufgabe der Erfindung ist es nun ein Umbugverfahren für ein durch Hinterspritzen hergestelltes Formteil zu geben, bei dem der Rand des Beleg- oder Dekormaterials ohne zusätzliche Haftmittel oder Vorbehandlungen umgebugt wird, und das Formteil ohne einen zusätzlichen Arbeitsgang nach dem Entnehmen aus der Formwerkzeugmaschine weiterverwendet werden kann.

Die Aufgabe wird erfindungsgemäß durch die Merkmale der Ansprüche 1 und 3 gelöst. Vorteilhafte Aus- und Weiterbildungen sind in den Unteransprüchen beschrieben.

Der Vorteil der Erfindung besteht darin, daß sich das Befestigen des Beleg- oder Dekormaterialendes unmittelbar an das Hinterspritzen anschließt. Das Dekormaterial kann zu diesem Zeitpunkt ohne jegliche Vorbehandlung des Formteilrandes oder Aufbringen von Haftmitteln auf das Dekormaterialende durch Eindrücken mittels eines Stempels in das noch plastisch verformbare Formteil befestigt werden. Ein gesonderter Arbeitsgang nach dem Entnehmen des Formteiles aus der Formwerkzeugmaschine ist somit nicht erforderlich.

Besonders vorteilhaft ist, das Beleg- oder Dekormaterialende während des Einspritzvorganges außerhalb des Formteilhohlraumes zu halten, wodurch ein Eindringen von Formteilmasse zwischen die Werkzeugwand und das Beleg- oder Dekormaterial sicher verhindert wird.

Ein Ausführungsbeispiel der Erfindung ist in den Zeichnungen dargestellt und wird im folgenden näher beschrieben. Es zeigen:
- Figur 1a: Ausschnitt eines Formwerkzeuges in einer Stellung vor dem Hinterspritzen;
- Figur 1b: Ausschnitt eines Formwerkzeuges in der Stellung während des Hinterspritzens
- Figur 1c: Ausschnitt eines Formwerkzeuges in der Stellung nach Beendigung des Hinterspritzens;
- Figur 1d: Ausschnitt eines Formwerkzeuges in einer Stellung mit zurückgefahrenem ersten Schieber;
- Figur 1e: Ausschnitt eines Formwerkzeuges vor dem Befestigen des Beleg- oder Dekormaterialendes;
- Figur 1f: Ausschnitt eines Formwerkzeuges während des Befestigen des Beleg- oder Dekormaterialendes;
- Figur 2: Befestigung des Beleg- oder Dekormaterialendes an dem Ende des ersten Schiebers.

Das Beispiel zeigt nur den Teil des Formwerkzeuges, mit dem der Umbug durchgeführt wird. Der Umbugmechanismus ist unabhängig von der Art und Form des Formteiles.

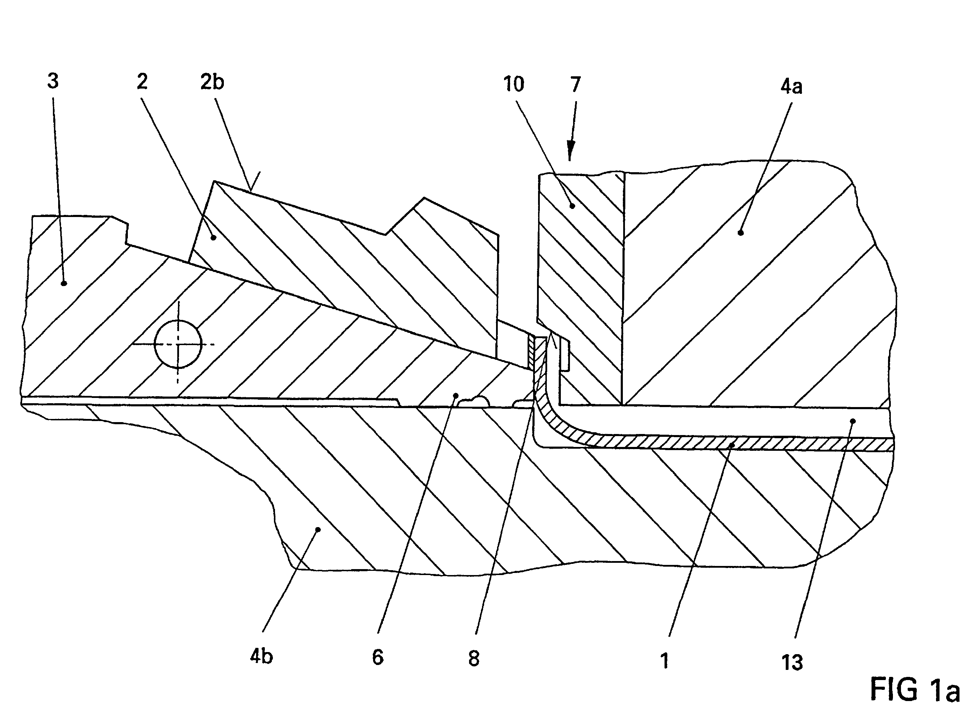

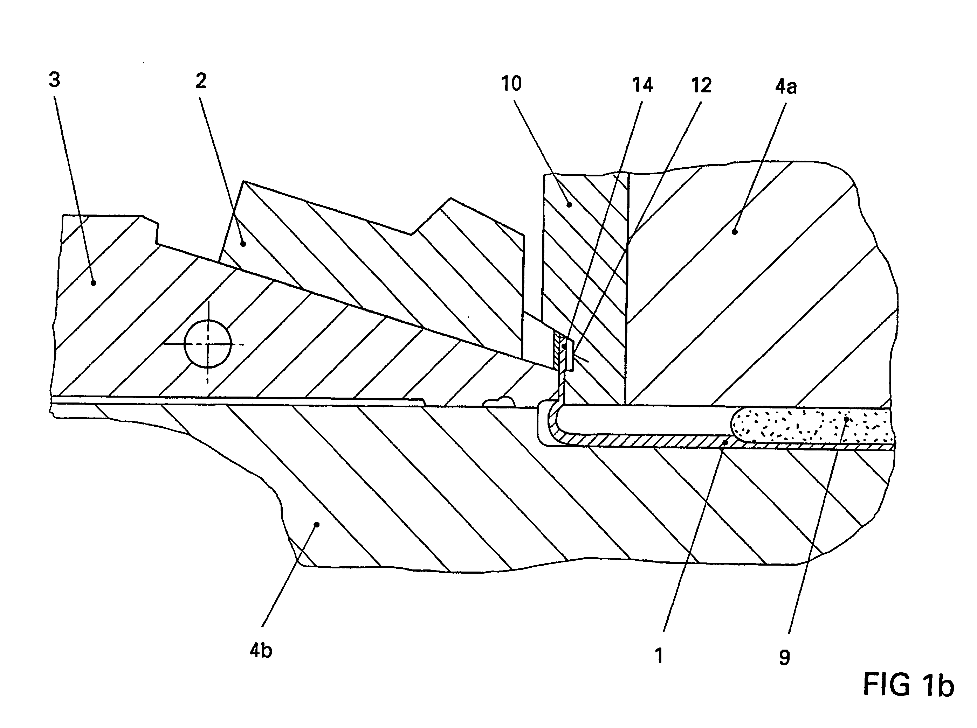

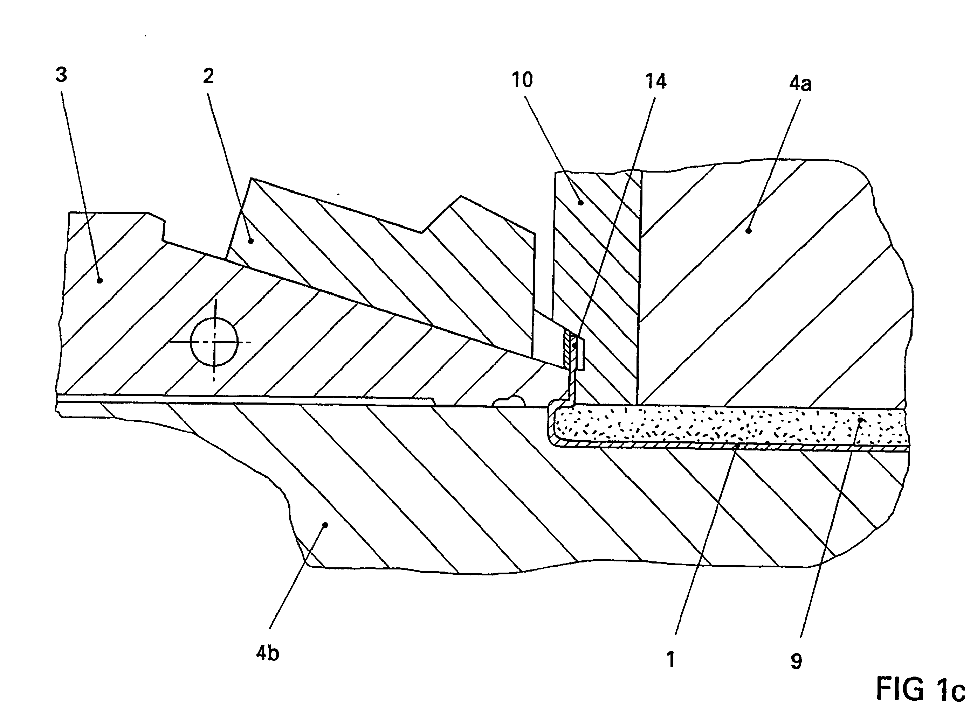

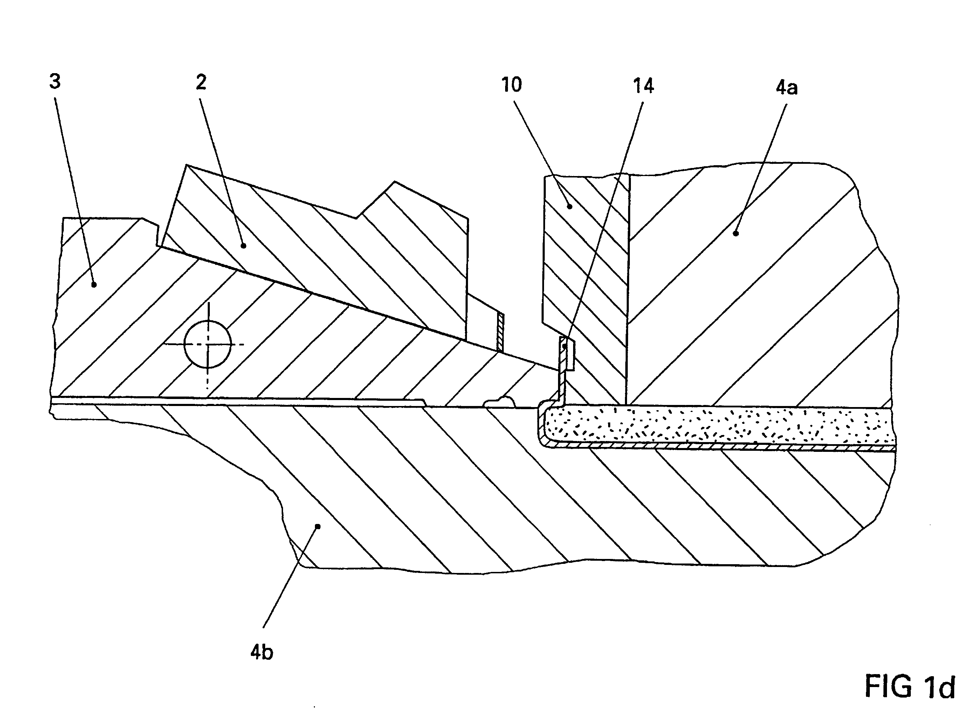

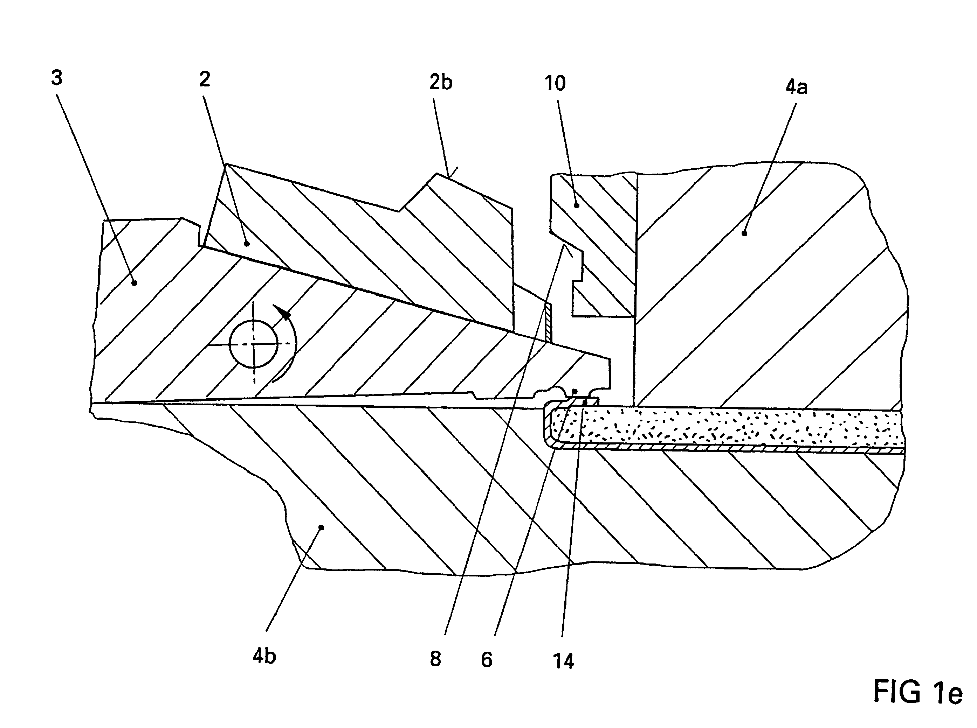

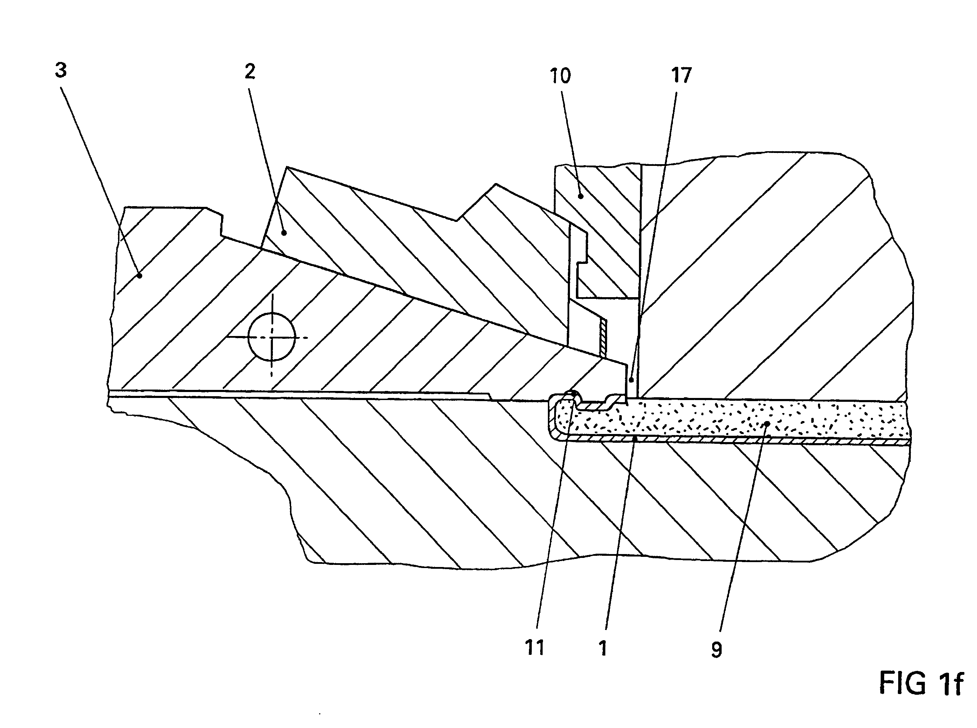

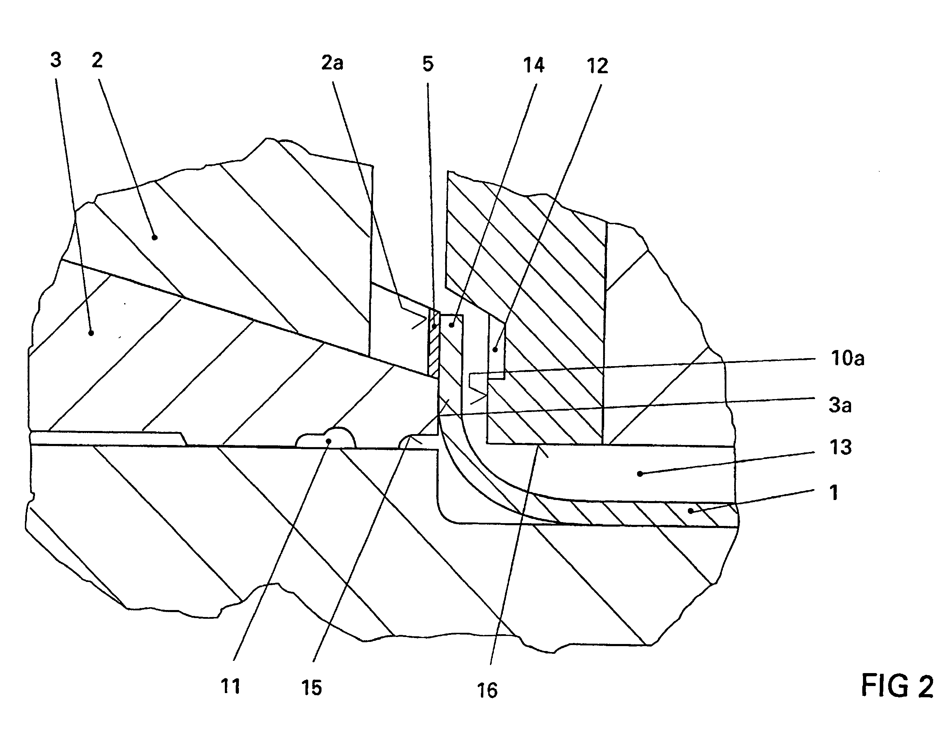

Das in Figur 1 a und Figur 2 dargestellte Beleg- oder Dekormaterial 1 wird durch geeignete Befestigungsmittel 5 vorzugsweise durch ein zumindest stellenweise an der Stirnseite des in der Vorderposition befindlichen ersten Schiebers 2 befestigtes Klettband gehalten. Der erste Schieber 2 wird dann gemeinsam mit dem zweiten Schieber 3 zu dem Schieber 10 bewegt (Figur 1b) und verschließt damit mit den Arbeitsflächen 15 und 16 den Formteilhohlraum 13. Das Beleg- oder Dekormaterialende 14 wird dabei zwischen der stirnseitige Fläche 3a und der Fläche 10a fest eingeklemmt. Besonders vorteilhaft ist hierbei, daß das Beleg- oder Dekormaterialende 14 während des Hinterspritzvorganges außerhalb des Formteilhohlraumes 13 durch Einklemmen des Beleg- oder Dekormaterialendes 14 zwischen der stirnseitigen Fläche 3a und der Fläche 10a gehalten wird. Somit kann während des Hinterspritzens keine Formteilmasse zwischen Werkzeugwand und Beleg- oder Dekormaterial 1 gelangen. Auf der gegenüberliegenden Seite der Stirnfläche 2a ist vorteilhafterweise eine Vertiefung 12 in der Fläche 10a vorgesehen. Ein Zusammendrücken des Klettbandes bei zusammengefahrenen Schiebern 2, 3, 10 wird dadurch sicher verhindert. Das Klettband behält damit seine Haftfähigkeit über einem erheblich längeren Gebrauchszeitraum. Nach dem Hinterspritzen (Figur 1c) wird der erste Schieber 2 von dem Formteil wegbewegt, wobei das Beleg- oder Dekormaterialende 14 von dem Befestigungsmittel 5 gelöst wird (Figur 1d). Der dritte Schieber 10 wird dann von dem Formteil 9 wegbewegt. Nachdem der dritte Schieber 10 seine entfernte Position erreicht hat, wird die dem Formteil 9 zugewandte Seite des zweiten Schiebers 3 zusammen mit dem ersten Schieber 2 angehoben. Besonders vorteilhaft ist hierbei, wenn der zweite Schieber 3 drehbar gelagert ist und durch hier nicht gezeigte Mittel angekippt wird. Der zweite Schieber 3 wird dann zu dem Formteil 9 hinbewegt, wobei das Belegoder Dekormaterialende 14 zwischen den Stempel 6 und das Formteil 9 gebracht wird (Figur 1e). Durch Verkeilen der kopfseitigen Fläche 2b des ersten Schiebers 2 mit der schrägen Fläche 8 des dritten Schiebers 10 befestigt der Stempel 6 das Beleg- oder Dekormaterialende 14 durch Einpressen in das noch plastisch verformbare Formteil 9 (Figur 1f).
Vorteilhaft ist dabei, wenn im Randbereich des Stempels 6 eine oder mehrere Vertiefungen 11 im ersten Schieber 2 vorgesehen sind, in die die verdrängte Formteilmasse entweichen kann.
Alternativ oder ergänzend zu den Vertiefungen 11 kann auch im Bereich der auf dem Formteil 9 endenden äußeren Körperkante ein Freiraum 17 zur Aufnahme der durch den Stempel 6 verdrängten Formteilmasse vorgesehen werden.

### BEZUGSZEICHEN

- 1: Beleg- oder Dekormaterial
- 2: erster Schieber
- 3: zweiter Schieber
- 4a: obere Formwerkzeughälfte
- 4b: untere Formwerkzeughälfte
- 5: Befestigungsmittel
- 6: Stempel
- 7: Formwerkzeug
- 8: schräge Fläche
- 9: Formteil
- 10: dritter Schieber
- 11: Vertiefung
- 12: Vertiefung
- 13: Formteilhohlraum
- 14: Beleg- oder Dekormaterialende
- 15: Arbeitsfläche
- 16: Arbeitsfläche
- 17: Freiraum
- 2a: stirnseitige Fläche
- 2b: kopfseitige Fläche
- 3a: stirnseitige Fläche
- 10a: Fläche

## Patentansprüche

1. Verfahren zum Herstellen eines Formteiles (9) mit von Beleg- oder Dekormaterial (1) bedeckter Oberfläche durch Hinterspritzen des in einem Formteilhohlraum (13) eingelegten Beleg- oder Dekormaterials (1) mit einem Kunststoff und Umbugen des Beleg- oder Dekormaterialendes (14), **dadurch gekennzeichnet, daß** das Beleg- oder Dekormaterialende (14) nach dem Umbug-Spritzvorgang durch Eindrücken in das noch plastisch verformbare Formteil (9) befestigt wird.

2. Verfahren nach Anspruch 1, **dadurch gekennzeichnet, daß** das Beleg- oder Dekormaterialende (14) während des Hinterspritzvorganges außerhalb des Formteilhohlraumes (13) gehalten wird.

3. Vorrichtung zum Herstellen eines Formteiles (9) mit von Beleg- oder Dekormaterial (1) bedeckter Oberfläche mit einem ein- oder mehrteilig ausgebildeten Formwerkzeug (7), das einen Formteilhohlraum (13) zum Einlegen des Beleg- oder Dekormaterial (1) und anschließendem Hinterspritzen desselben mit gleichzeitigem Umbugen des Belegoder Dekormaterialendes (14), aufweist, welcher im Bereich des um das Formteil (9) umgebugten Endes des Beleg- oder Dekormaterials (1) eine Öffnung aufweist, die über einen Schieber (2) während des Einspritzvorganges geschlossen ist, **dadurch gekennzeichnet, daß** mindestens ein zweiter und ein dritter Schieber (3; 10) vorgesehen sind, deren die Öffnung des Formteilhohlraums (13) verschließende Arbeitsflächen (15;16) in einem vom herzustellenden Formteil (9) abhängigen Winkel zueinander angeordnet sind, wobei die drei Schieber (2; 3; 10) derart zueinander bewegbar angeordnet sind, daß nach Beendigung des Hinterspritzvorgangs das Ende des Beleg- oder Dekormaterials (14) in dem noch plastisch verformbaren Formteil (9) durch Druck der Schieber (2; 3; 10) aufeinander eindrückbar ist.

4. Vorrichtung nach Anspruch 3, **dadurch gekennzeichnet, daß** der zweite Schieber (3) an einer dem Formteil zugewandten Seite einen Stempel (6) aufweist, über den das Beleg- oder Dekormaterialende (14) in dem noch plastisch verformbaren Formteil (9) eindrückbar ist.

5. Vorrichtung nach Anspruch 3 oder 4, **dadurch gekennzeichnet, daß** eine stirnseitige Fläche (2a) des ersten Schiebers (2) oder eine Fläche (10a) des dritten Schiebers (10) lösbare Befestigungsmittel (5) aufweist, mit denen das Beleg- oder Dekormaterialende (14) vor dem Hinterspritzvorgang eindrückbar ist.

6. Vorrichtung nach Anspruch 5, **dadurch gekennzeichnet, daß** das Beleg- oder Dekormaterialende durch ein Klettband an dem ersten oder dritten Schieber (2; 10) haltbar ist.

7. Vorrichtung nach Anspruch 6, **dadurch gekennzeichnet, daß** die dem Klettband gegenüberliegende Fläche (10a; 2a) eine Vertiefung (12) aufweist.

8. Vorrichtung nach einem der Ansprüche 3 bis 7, **dadurch gekennzeichnet, daß** der Formteilhohlraum (13) durch Bewegen des ersten und zweiten Schiebers (2; 3) mit den stirnseitigen Flächen (2a; 3a) und dem an der stirnseitigen Fläche (2a) befestigten Beleg- oder Dekormaterialende (14) gegen die Fläche (10a) des dritten Schiebers (10) verschließbar ist.

9. Vorrichtung nach einem der Ansprüche 3 bis 8, **dadurch gekennzeichnet, daß** der zweite oder dritte Schieber (3; 10) drehbar gelagert ist.

10. Vorrichtung nach einem der Ansprüche 3 bis 9, **dadurch gekennzeichnet, daß** der zweite Schieber (3) an seiner dem Formteil (9) zugewandten Seite im Bereich des Stempels (6) eine oder mehrere Vertiefungen (11) zur Aufnahme der durch den Stempel (6) verdrängten Formteilmasse aufweist.

11. Vorrichtung nach einem der Ansprüche 3 bis 10, **dadurch gekennzeichnet, daß** im Bereich der auf dem Formteil endenden äußeren Körperkante des das Beleg- oder Dekormaterialende (14) befestigenden zweiten oder dritten Schiebers (3; 10) ein Freiraum (17) zur Aufnahme der während des Befestigungsvorgangs durch den Stempel (6) verdrängten Formteilmasse vorgesehen ist.

## Claims

1. Method of producing a moulding (9) with a surface covered by covering or decorative material (1) by back-injection moulding the covering or decorative material (1), placed in a moulding cavity (13), with a plastic and folding around the end (14) of the covering or decorative material, **characterized in that** the end (14) of the covering or decorative material is fastened after the folding-around/injection moulding operation by pressing it into the still plastically deformable moulding (9).

2. Method according to Claim 1, **characterized in that** the end (14) of the covering or decorative material is held outside the moulding cavity (13) during the back-injection moulding operation.

3. Device for producing a moulding (9) with a surface covered by covering or decorative material (1), with a mould (7) which is formed in one or more parts and has a moulding cavity (13) for placing the covering or decorative material (1) and subsequently back-injection moulding it, with the end (14) of the covering or decorative material simultaneously being folded around, which cavity has in the region of the end of the covering or decorative material (1) folded around the moulding (9) an opening which is closed by a slide (2) during the injecting operation, **characterized in that** at least a second and a third slide (3; 10) are provided, of which the working faces (15; 16) closing the opening of the moulding cavity (13) are arranged in relation to one another at an angle dependent on the moulding (9) to be produced, the three slides (2; 3; 10) being arranged such that they are movable in relation to one another in such a way that, after completion of the back-injection moulding operation, the end (14) of the covering or decorative material can be pressed into the still plastically deformable moulding (9) by pressure of the slides (2; 3; 10) on one another.

4. Device according to Claim 3, **characterized in that** the second slide (3) has on a side facing the moulding a punch (6), by means of which the end (14) of the covering or decorative material can be pressed into the still plastically deformable moulding (9).

5. Device according to Claim 3 or 4, **characterized in that** an end face (2a) of the first slide (2) or a face (10a) of the third slide (10) has releasable fastening means (5), by which the end (14) of the covering or decorative material can be pressed in before the back-injection moulding operation.

6. Device according to Claim 5, **characterized in that** the end of the covering or decorative material can be held on the first or third slide (2; 10) by a touch-and-close strip.

7. Device according to Claim 6, **characterized in that** the face (10a; 2a) lying opposite the touch-and-close strip has a depression (12).

8. Device according to one of Claims 3 to 7, **characterized in that** the moulding cavity (13) can be closed by moving the first and second slides (2; 3) with the end faces (2a; 3a) and the end (14) of the covering or decorative material fastened on the end face (2a) against the face (10a) of the third slide (10).

9. Device according to one of Claims 3 to 8, **characterized in that** the second or third slide (3; 10) is pivotably mounted.

10. Device according to one of Claims 3 to 9, **characterized in that** the second slide (3) has on its side facing the moulding (9), in the region of the punch (6), one or more depressions (11) for receiving the moulding composition displaced by the punch (6).

11. Device according to one of Claims 3 to 10, **characterized in that**, in the region of the outer body edge, ending on the moulding, of the second or third slide (3; 10) fastening the end (14) of the covering or decorative material, a clearance (17) is provided for receiving the moulding composition displaced by the punch (6) during the fastening operation.

## Revendications

1. Procédé pour fabriquer une pièce moulée (9) avec une surface couverte par une matière de garniture ou de décoration (1) par projection par l'arrière d'une matière plastique sur la matière de garniture ou de décoration (1) introduite dans un volume creux de pièce moulée (13) et rabattement de l'extrémité (14) de la matière de garniture ou de décoration, **caractérisé en ce que** l'extrémité (14) de la matière de garniture ou de décoration est fixée après l'opération de projection et de rabattement, par enfoncement dans la pièce moulée (9) encore déformable de manière plastique.

2. Procédé suivant la revendication 1, **caractérisé en ce que** l'extrémité (14) de la matière de garniture ou de décoration est maintenue à l'extérieur du volume creux de pièce moulée (13) pendant l'opération de projection par l'arrière.

3. Dispositif pour fabriquer une pièce moulée (9) avec une surface couverte par une matière de garniture ou de décoration (1) avec un outil de moulage (7) constitué d'une ou de plusieurs pièces, qui présente un volume creux de pièce moulée (13) pour l'introduction de la matière de garniture ou de décoration (1) et ensuite pour la projection sur l'arrière de celle-ci en repliant en même temps l'extrémité (14) de la matière de garniture ou de décoration, volume creux qui présente, dans la région de l'extrémité de la matière de garniture ou de décoration (1) repliée autour de la pièce moulée (9), une ouverture qui est fermée par un coulisseau (2) pendant l'opération d'injection, **caractérisé en ce qu'**il est prévu au moins un deuxième et un troisième coulisseaux (3; 10), dont les faces de travail (15; 16) fermant l'ouverture du volume creux de pièce moulée (13) sont disposées l'une par rapport à l'autre sous un angle dépendant de la pièce moulée (9) à fabriquer, dans lequel les trois coulisseaux (2; 3; 10) sont disposés de façon mobile l'un par rapport à l'autre de manière telle qu'après la fin de l'opération de projection par l'arrière, l'extrémité (14) de la matière de garniture ou de décoration puisse être enfoncée dans la pièce moulée (9) encore déformable de manière plastique par la pression des coulisseaux (2; 3; 10) l'un contre l'autre.

4. Dispositif suivant la revendication 3, **caractérisé en ce que** le deuxième coulisseau (3) présente, sur un côté tourné vers la pièce moulée, un poinçon (6), avec lequel l'extrémité (14) de la matière de garniture ou de décoration peut être enfoncée dans la pièce moulée (9) encore déformable de manière plastique.

5. Dispositif suivant la revendication 3 ou 4, **caractérisé en ce qu'**une face frontale (2a) du premier coulisseau (2) ou une face (10a) du troisième coulisseau (10) présente des moyens de fixation détachables (5), avec lesquels l'extrémité (14) de la matière de garniture ou de décoration peut être enfoncée avant l'opération de projection par l'arrière.

6. Dispositif suivant la revendication 5, **caractérisé en ce que** l'extrémité de la matière de garniture ou de décoration peut être maintenue par une bande velcro sur le premier ou le troisième coulisseau (2; 10).

7. Dispositif suivant la revendication 6, **caractérisé en ce que** la face (10a; 2a) opposée à la bande velcro présente un évidement (12).

8. Dispositif suivant l'une quelconque des revendications 3 à 7, **caractérisé en ce que** le volume creux de pièce moulée (13) peut être fermé par le mouvement du premier et du deuxième coulisseaux (2; 3) avec les faces frontales (2a; 3a) et avec l'extrémité (14) de la matière de garniture ou de décoration fixée sur la face frontale (2a) contre la face (10a) du troisième coulisseau (10).

9. Dispositif suivant l'une quelconque des revendications 3 à 8, **caractérisé en ce que** le deuxième ou le troisième coulisseaux (3; 10) est supporté de façon rotative.

10. Dispositif suivant l'une quelconque des revendications 3 à 9, **caractérisé en ce que** le deuxième coulisseau (3) présente sur son côté tourné vers la pièce moulée (9), dans la région du poinçon (6), un ou plusieurs évidements (11) destinés à recevoir la masse de la pièce moulée déplacée par le poinçon (6).

11. Dispositif suivant l'une quelconque des revendications 3 à 10, **caractérisé en ce qu'**il est prévu, dans la région du bord matériel extérieur, se terminant sur la pièce moulée, du deuxième ou du troisième coulisseau (3; 10) qui fixe l'extrémité (14) de la matière de garniture ou de décoration, un espace libre (17) destiné à recevoir la masse de la pièce moulée déplacée par le poinçon (6) pendant l'opération de fixation.
